# EUROPÄISCHE PATENTANMELDUNG

(11) **EP 4 744 466 A1**
(43) Veröffentlichungstag der Anmeldung: **20.05.2026**
(21) Anmeldenummer: 25215146.9
(22) Anmeldetag: 12.11.2025
(51) Int. Cl.: A01B 15/08, A01B 15/10, A01B 17/00

(54) **BODENBEARBEITUNGSGERÄT**

(30) Priorität: 13.11.2024 DE 102024133179
(71) Anmelder: Lemken GmbH & Co KG, 46519 Alpen (DE)
(72) Erfinder: Eirmbter, Sebastian, 47877 Willich (DE); Fröming, Fabian, 01445 Radebeul (DE)

(57) **Zusammenfassung**

Die vorliegende Erfindung betrifft einen Pflug, insbesondere Drehpflug, mit einem Pflugrahmen und mindestens zwei Pflugkörpern, wobei die Pflugkörper an dem Pflugrahmen angeordnet sind. Gemäß der Erfindung ist in Arbeitsrichtung des Pfluges gesehen endseitig des Pflugrahmens, insbesondere im Bereich eines hintersten Pflugkörpers, mindestens ein erdbewegendes Werkzeug angeordnet, wobei das Werkzeug derart ausgestaltet ist, dass ein durch das Werkzeug bearbeiteter Boden auf dem ungepflügten Boden, insbesondere benachbart zu einer Pflugfurche des hintersten Pflugkörpers, insbesondere zumindest teilweise, abgelegt wird.

## Beschreibung

Die vorliegende Erfindung betrifft ein Bodenbearbeitungsgerät in Form eines Pfluges.

In der Landwirtschaft werden Pflüge üblicherweise zu einer Wendung und Lockerung des Bodens nach einer vorangegangenen Bearbeitung eingesetzt, wobei dies zeitlich versetzt oder zusammen in Kombination mit anderen Bodenbearbeitungsgeräten erfolgen kann. Der Boden wird dabei im Wesentlichen ganzheitlich gelockert, gemischt und organische Reststoffe nahezu gleichmäßig eingearbeitet. Die Pflüge werden an eine Zugmaschine angebaut oder angehängt. Mit zunehmend leistungsstärkeren Zugmaschinen kommen auch vermehrt breitere Reifen zum Einsatz, um zum einen die Traktion zu verbessern und zum anderen das oftmals höhere Maschinengewicht besser auf den Boden zu verteilen, um eine unerwünschte Bodenverdichtung zu vermeiden. Eine mit herkömmlichen Pflugkörpern erzeugte Pflugfurche kann zu schmal sein, um die breiteren Reifen des Zugfahrzeuges aufzunehmen, so dass bereits gepflügter und gelockerter Boden wieder festgefahren wird.

Aus der DE 1 913 507 U ist ein Pflug mit einer Vorrichtung zum Furchenräumen bekannt, wobei die Vorrichtung aus einem unterhalb des Streichblechs zur Furchensohle hin gerichteten Leitblech besteht. Hierdurch wird der Furchenboden breiter ausgeräumt, so dass für ein in der Furche laufendes breiteres Hinterrad eines Schleppers hinreichend Platz ist. Nachteilig ist hierbei, dass es durch das Leitblech zu einem Schieben des Bodens und damit einer unsauberen Ablage des Bodens kommen kann.

Aus der EP 2 837 276 A1 ist ein Pflug bekannt, welcher Pflugkörper jeweils mit einem Pflugschar und einem Leitblech aufweist, wobei an einem Pflugschar ein Leitorgan das Leitblech seitlich verlängert, um so eine relativ breite, möglichst krümelfreie breite Furche zu schaffen. Nachteilig ist hierbei jedoch, dass der gewendete Boden zum Teil noch mit zu breiten Reifen eines Zugfahrzeuges überfahren werden kann und dass durch die breiter ausgeräumte Furche, insbesondere trockener und/oder lockerer, Boden in die Furche nachrutschen kann, welcher durch die Zugmaschine festgefahren und verdichtet werden kann.

Es ist daher die Aufgabe der vorliegenden Erfindung, einen Pflug bereitzustellen, welcher ein Erzeugen eines sauberen und ebenen Pflugbildes mit einer verbreiterten Pflugfurche ohne nennenswerte Erhöhung einer Zugkraft ermöglicht und ackerbauliche Nachteile zu vermeiden hilft.

Die Aufgabe wird gelöst durch einen Pflug gemäß den Merkmalen des Anspruches 1. Vorteilhafte Ausgestaltungen der Erfindung sind in den Unteransprüchen angegeben.

Die Erfindung betrifft einen Pflug, insbesondere einen Drehpflug, mit einem Pflugrahmen und mindestens zwei Pflugkörpern, wobei die Pflugkörper, insbesondere mittels Pflugkörperhalmen, an dem Pflugrahmen angeordnet sind. Gemäß der Erfindung ist, in Arbeitsrichtung des Pfluges gesehen, endseitig des Pflugrahmens, insbesondere im Bereich eines hintersten Pflugkörpers, mindestens ein erdbewegendes Werkzeug angeordnet, wobei das Werkzeug derart ausgestaltet ist, dass ein durch das Werkzeug bearbeiteter Boden auf dem ungepflügten Boden, insbesondere benachbart zu einer Pflugfurche des hintersten Pflugkörpers, insbesondere zumindest teilweise, abgelegt wird.

Der Pflug, insbesondere Drehpflug, kann in Form eines Anbaupfluges oder eines Anhängepfluges ausgestaltet sein. Der Pflug kann eine Mehrzahl an Pflugkörpern aufweisen, welche jeweils mittels Pflugkörperhalmen an einem Pflugrahmen, insbesondere in gleichmäßigen Abständen, angeordnet sein können. Die Pflugkörper können dabei mehrteilig aufgebaut sein, wobei die einzelnen Teile lösbar mit dem Pflugkörper verbunden sein können. Hierbei kann der Pflugkörper ein Pflugschar mit einer Schnittkante zum Schneiden des Bodens aufweisen, wobei angrenzend an das Pflugschar eine Scharspitze angeordnet sein kann. Die Scharspitze kann in Arbeitsrichtung gesehen zumindest teilweise über das Pflugschar hinausragen. In einer vertikalen Richtung kann sich die Scharspitze zumindest teilweise bis unterhalb des Pflugschars erstrecken. Durch zumindest das Pflugschar und die Scharspitze kann eine Pflugfurche durch den Pflugkörper im Boden erzeugt werden. An das Pflugschar und/oder die Scharspitze kann unmittelbar angrenzend ein Streichblech, insbesondere in Form von einem durchgehenden Streichblech oder mehreren Streichblechstreifen, angeordnet sein, um den durch das Pflugschar angehobenen Boden aufzunehmen und seitlich abzulegen. Landseitig, also an einer dem unbearbeiteten Boden zugewandten Seite, kann der Pflugkörper eine Anlage aufweisen, welche beispielsweise in Arbeitsrichtung gesehen hinter der Scharspitze angeordnet sein kann und im Wesentlichen senkrecht zum Boden in Form einer eben Fläche ausgestaltet sein kann. Die Anlage ist landseitig, also dem unbearbeiteten Boden zugewandt, an dem Pflugkörper angeordnet.

In Arbeitsrichtung gesehen, kann an einem dem Zugfahrzeug abgewandten Ende des Pflugrahmens, endseitig des Pflugrahmens, ein hinterster Pflugkörper angeordnet sein. In einem Bereich des hintersten Pflugkörpers kann mindestens ein erdbewegendes Werkzeug angeordnet sein, welches derart ausgestaltet ist, dass ein durch das Werkzeug bearbeiteter Boden auf dem ungepflügten Boden, insbesondere benachbart zu einer Pflugfurche des hintersten Pflugkörpers, insbesondere zumindest teilweise, abgelegt wird. Das Werkzeug kann benachbart zu dem hintersten Pflugkörper, den hintersten Pflugkörper kontaktierend oder an dem hintersten Pflugkörper angeordnet sein. In einer Arbeitsstellung des Pfluges kann das Werkzeug erdbewegend in Bodeneingriff sein, wobei der von dem Werkzeug angehobene Boden zur Landseite hin gewendet und zumindest teilweise auf dem ungepflügten Boden abgelegt werden kann, wodurch dieser im Wesentlichen von dem Pflugkörper weg geleitet werden kann.

Das Werkzeug kann im Wesentlichen außerhalb eines Wirkbereiches des Pflugkörpers, insbesondere dessen Pflugschar und/oder Scharspitze, angeordnet sein, so dass eine Aufnahme und Ablage des vom Pflugkörper aufgenommenen Bodens nicht beeinträchtigt wird. Das Werkzeug kann im Vergleich zu dem Pflugkörper, insbesondere des Pflugschars, kleiner ausgebildet sein, wodurch es im Bodeneingriff nur zu einer geringen Erhöhung der Zugkraft kommen kann. Zudem kann durch das dem Pflugkörper, insbesondere dessen Pflugschar, entgegengesetzt wirkende Werkzeug ein Teil der vom Pflugkörper erzeugten Seitenkraft, welche in Richtung der Landseite wirkt, kompensiert werden. Durch das Werkzeug kann eine Pflugfurche des hintersten Pflugkörpers derart verbeitert werden, dass auch breitere Reifen einer Zugmaschine in der verbreiterten Pflugfurche fahren können. Eine gewünschte Breite der verbreiterten Pflugfurchen kann dabei durch Verwendung eines entsprechend breiten Werkzeuges ermöglicht werden.

Dadurch, dass der durch das Werkzeug aufgenommene Boden landseitig, also auf dem ungepflügten Boden, benachbart zur Pflugfurche geworfen wird, können Erdanhäufungen im Pflugfurchengrund und ein Festfahren dieser Erde in der verbreiterten Pflugfurche durch breitere Reifen vermieden werden, was ackerbaulich vorteilhaft ist. Ein weiterer Vorteil ist, dass die landseitig, benachbart zur Pflugfurche geworfene Erde des Werkzeuges, bei einer folgenden Überfahrt von einem in Arbeitsrichtung ersten Pflugkörper des Pfluges in dessen Pflugfurche geworfen werden kann. Dies hat den Vorteil, dass es durch das erdbewegende Werkzeug zu keiner Erdverlagerung des Bodens durch das Pflügen kommt, wodurch ein sauberes und ebenes Pflugbild erreicht wird.

In einer bevorzugten Ausgestaltung ist das Werkzeug zumindest teilweise an einer dem ungepflügten Boden zugewandten Seite des hintersten Pflugkörpers angeordnet. Das Werkzeug kann benachbart zu dem Pflugkörper, den Pflugkörper kontaktieren oder unmittelbar an dem Pflugkörper angeordnet sein. Das Werkzeug kann mit dem Pflugrahmen und/oder dem hintersten Pflugkörper zumindest teilweise, insbesondere lösbar, verbunden sein. Das Werkzeug kann beispielsweise an der Anlage des hintersten Pflugkörpers angeordnet sein.

In einer besonders bevorzugten Ausgestaltung ist in Arbeitsrichtung ein horizontaler Abstand des Werkzeuges, insbesondere eines Werkzeugschars, relativ zum Pflugkörper, insbesondere dessen Scharspitze, einstellbar. Das Werkzeug kann ein Werkzeugschar zur Aufnahme des Bodens aufweisen. Das Werkzeug kann dabei, insbesondere mit dessen Werkzeugschar, in Arbeitsrichtung zumindest teilweise vor, neben oder hinter dem Pflugkörper, insbesondere dessen Scharspitze, angeordnet sein. Eine Position des Werkzeuges kann dabei auf eine Vorderkante der Scharspitze des Pflugkörpers bezogen werden. Durch einen horizontalen Abstand des Werkzeuges zu dem Pflugkörper kann das Werkzeug im Wesentlichen aus dem Wirkbereich des Pflugkörpers herausgehalten werden. Das Werkzeug kann beispielsweise an der Anlage des Pflugkörpers in Arbeitsrichtung hinter der Scharspitze, und insbesondere dem Pflugschar, angeordnet sein. Dies hat den Vorteil dass das Werkzeug den Boden hinter dem Pflugschar schneidet und dann entgegengesetzt zu diesem landseitig ablegt.

In einer weiteren Ausgestaltung ist eine Arbeitstiefe des Werkzeuges, insbesondere des Werkzeugschars, relativ zum Pflugkörper, insbesondere dessen Scharspitze, einstellbar. Eine Verstellung des Werkzeuges kann dabei im Wesentlichen in einer senkrechten bzw. vertikalen Richtung erfolgen. Eine Einstellung des Werkzeuges kann dabei relativ zu einer Unterkante der Scharspitze des Pflugkörpers erfolgen. Hierbei kann das Werkzeug, insbesondere das Werkzeugschar bzw. dessen Schnittkante, auf einer gleichen Höhe, oberhalb oder unterhalb der Scharspitze des Pflugkörpers angeordnet sein. Hierdurch kann ein Querschnittsprofil der Pflugfurche des hintersten Pflugkörpers eingestellt werden, welches beispielsweise eben sein kann oder einen durch das Werkzeug erzeugten Absatz landseitig des Pflugkörpers aufweisen kann.

In einer besonders bevorzugten Ausgestaltung ist das Werkzeug, insbesondere dessen Werkzeugschar, unter einem, insbesondere einstellbaren, Winkel relativ zu dem Pflugkörper, insbesondere dessen Anlage, und/oder der Arbeitsrichtung angeordnet. Eine Einstellung des Winkels des Werkzeuges kann um eine im Wesentlichen senkrechte Achse erfolgen. Das Werkzeug, insbesondere das Werkzeugschar, können dabei unmittelbar an dem Pflugkörper, insbesondere dessen Anlage, angeordnet sein. Der einstellbare Winkel des Werkzeuges kann auf die Arbeitsrichtung und/oder die Anlage bezogen sein, wobei beispielsweise bei einem stumpfen Winkel ein landseitiges Ende des Werkzeuges in Arbeitsrichtung hinter einem Pflugkörperseitigen Ende des Werkzeuges angeordnet sein kann. Die Schnittkanten des Pflugschars und des Werkzeugschars können dabei zumindest teilweise entgegengesetzt fassen. Eine Einstellung des Winkels kann manuell oder automatisch, unabhängig oder gekoppelt mit einer Verstellung des Pflugkörpers erfolgen.

In einer weiter besonders bevorzugten Ausgestaltung ist das Werkzeug ein- oder mehrteilig ausgestaltet. Das Werkzeug kann einen Grundkörper aufweisen, welcher beispielsweise mit dem Pflugrahmen und/oder dem Pflugkörper, insbesondere über einen Werkzeughalm des Werkzeuges, verbunden sein kann. An dem Grundkörper können mindestens ein Werkzeugschar und/oder mindestens ein Werkzeugstreichblech lösbar angeordnet sein. Über das Werkzeugschar und/oder Werkzeugstreichblech kann eine Arbeitsbreite des Werkzeuges in Abhängigkeit beispielsweise einer Reifenbreite und/oder einer gewünschten Ablage des Bodens einstellbar sein. Ein weiterer Vorteil ist die Möglichkeit, einzelne Teile des Werkzeuges bei Verschleiß mit geringem Aufwand austauschen zu können. Das Werkzeugstreichblech kann zumindest teilweise oder vollständig landseitig des hintersten Pflugkörpers, insbesondere dessen Pflugschar und/oder dessen Anlage, angeordnet sein. Dies hat den Vorteil, dass der durch das Werkzeug bewegte Boden außerhalb, insbesondere benachbart zu, der Pflugfurche abgelegt wird, wodurch ein Festfahren durch breite Reifen vermieden wird.

In einer weiteren bevorzugten Ausgestaltung weist der Pflug mindestens eine Verstellvorrichtung, insbesondere einen Aktor, zum Verlagern mindestens eines Werkzeuges auf. Eine Verlagerung des Werkzeuge kann dabei eine Winkeländerung, eine Änderung der Position in horizontaler und/oder vertikaler Richtung sein. Die Verstellvorrichtung kann dabei an dem Pflugrahmen, einer Schwenktasche des Pflugrahmens, einem Pflugkörperhalm, einem Werkzeughalm, dem Pflugkörper und/oder dem Werkzeug, insbesondere dem Grundkörper des Werkzeuges, angeordnet sein. Die Verstellvorrichtung kann als mechanische Verstellvorrichtung, beispielsweise in Form von Schraubverbindungen in Verbindung mit Langlöchern in dem Werkzeug, und/oder durch mindestens einen Aktor zum Verlagern des Werkzeuges ausgebildet sein. Ein Aktor kann dabei elektrisch, hydraulisch, pneumatisch und/oder mechanisch wirken. Eine Verlagerung des Werkzeuges kann an eine Verstellung, beispielsweise eine, insbesondere horizontale, Schwenkbewegung, des Pfluges und/oder des Pflugkörpers gekoppelt sein.

In einer weiteren bevorzugten Ausgestaltung ist das Werkzeug an einem Pflugkörperhalm, einem Pflugkörper und/oder, insbesondere mittels eines Werkzeughalms, an dem Pflugrahmen angeordnet. Hierdurch kann eine Lagerung und/oder Einstellung des Werkzeuges unabhängig von dem benachbarten, hintersten Pflugkörper ermöglicht werden. Zudem kann so eine Nachrüstung des Werkzeuges an bestehende Pflüge mit geringem Aufwand erfolgen.

In einer weiterhin bevorzugten Ausgestaltung ist eine zweite Reihe an Pflugkörpern vorgesehene und mindestens ein zweites Werkzeug, insbesondere an einem zweiten hintersten Pflugkörper der zweiten Reihe an Pflugkörpern, vorgesehen. Eine zweite Reihe an Pflugkörpern ist üblicherweise bei Drehpflügen vorgesehen, wobei die Pflugkörper der zweiten Reihe den Pflugkörpern der ersten Reihe im Wesentlichen gespiegelt gegenüberliegend an dem Pflugrahmen angeordnet sein können. Die Pflugkörper der zweiten Reihe sowie das zweite Werkzeug weisen dabei gegenüber den Pflugkörpern der ersten Reihe und dem ersten Werkzeug eine spiegelverkehrte Form auf, da die zweite Reihe nach einer Wende im Vorgewende in eine entgegengesetzte Richtung den Boden umpflügt, so dass ein einheitliches Pflugbild erreicht werden kann. Bei einem Pflug in Form eines Drehpfluges können zudem an einer Schwenktasche jeweils zwei erste Pflugkörper oder zwei zweite Pflugkörper angeordnet sein, wobei die Pflugkörper derart vertikal übereinander angeordnet sein können, dass je Arbeitsrichtung nur einer der Pflugkörper im Bodeneingriff ist.

In einer bevorzugten Ausgestaltung weist der Pflug eine Schwenkvorrichtung zum im Wesentlichen horizontalen Verschwenken des Pflugrahmens auf, wobei der Pflugrahmen Schwenktaschen zur schwenkbaren Aufnahme der Pflugkörper, Pflugkörperhalme, Werkzeuge und/oder Werkzeughalme aufweist. Die Schwenkvorrichtung kann derart ausgebildet sein, dass der Pflugrahmen zusammen mit den Pflugkörpern zur variablen Schnittbreitenverstellung verschwenkt werden kann. Der Pflug kann dabei parallelrahmenfrei ausgestaltet sein.

Weitere Einzelheiten der Erfindung sind der Figur und der Figurenbeschreibung zu entnehmen, die eine bevorzugte Ausführung der Erfindung zeigen.

Es zeigt:
- Fig. 1:: einen Pflug in Form eines Anbaudrehpfluges in einer perspektivischen Ansicht mit jeweils an den hintersten Pflugkörpern angeordneten Werkzeugen;
- Fig. 2:: eine perspektivische Ansicht eines Pflugkörpers mit einem anlageseitig angeordneten Werkzeug; und
- Fig. 3:: eine Ansicht eines Pflugkörpers mit Werkzeug im Bodeneingriff in Arbeitsrichtung gesehen.

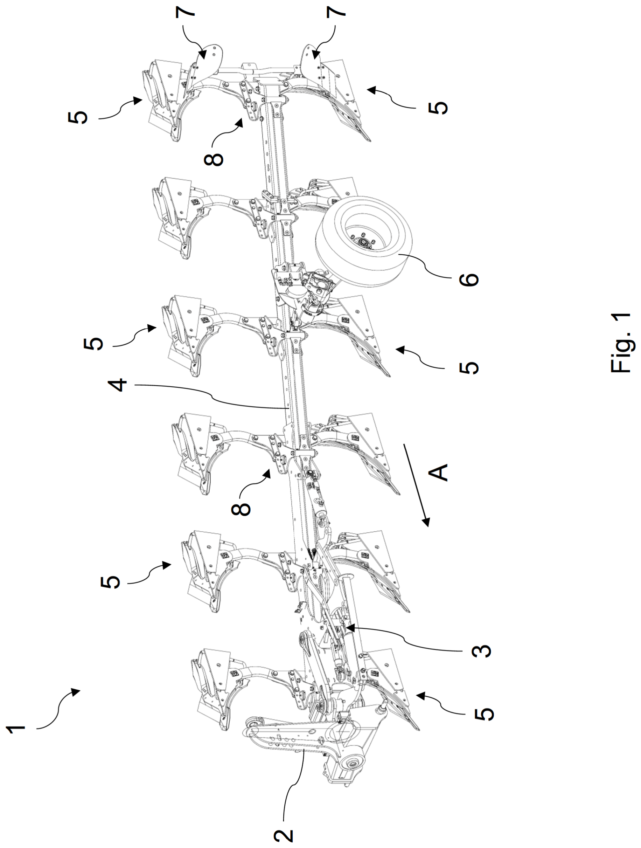

In Figur 1 ist ein Pflug 1 in Form eines Anbaudrehpfluges mit einem Pflugturm 2 für die Verbindung mit einem Dreipunktgestänge eines nicht dargestellten Zugfahrzeuges dargestellt. Der Pflug 1 weist einen Pflugrahmen 4 mit daran in zwei Reihen angeordneten Pflugkörpern 5 auf. Der Pflugrahmen 4 ist über eine Schwenkvorrichtung 3 in einer horizontalen Ebene verschwenkbar ausgebildet, wodurch eine Arbeitsbreite des Pfluges 1 einstellbar ist. Bei einem Verschwenken des Pfluges 1 werden die über Schwenktaschen 8 mit dem Pflugrahmen 4 verbundenen Pflugkörper 5 relativ zum Pflugrahmen 4 verschwenkt, so dass die Pflugkörper 4 in Arbeitsrichtung A ausgerichtet bleiben. Der Pflugrahmen 4 ist über ein Stützrad 6 gegenüber dem Boden abgestützt, wodurch eine Arbeitstiefe des Pfluges 1 einstellbar ist. In Arbeitsrichtung A des Pfluges 1 gesehen, sind endseitig des Pflugrahmens 4 zwei hintersten Pflugkörper 5 angeordnet.

Gemäß der Erfindung ist an jedem der hintersten Pflugkörper 5 ein erdbewegendes Werkzeug 7 angeordnet. Das Werkzeug 7 ist dabei landseitig, also einem ungepflügten Boden 21 zugewandt, an dem hintersten Pflugkörper 5 angeordnet. Das Werkzeug 7 ist derart ausgestaltet, dass ein durch das Werkzeug 7 bearbeiteter Boden auf dem ungepflügten Boden 21 benachbart zu einer Pflugfurche 20 des hintersten Pflugkörpers 5 abgelegt wird. Das Werkzeug 7 ist dabei im Wesentlichen außerhalb eines Wirkbereiches des Pflugschars 5 angeordnet, so dass eine Aufnahme und Ablage des vom Pflugkörper 5 aufgenommenen Bodens im Wesentlichen unbeeinträchtigt bleibt. Dies ermöglicht es, die Pflugfurche zu verbreitern, ohne dass durch breite Reifen des Zugfahrzeuges der gelockerte Boden in der Pflugfurche wieder festgefahren wird. Der durch das Werkzeug 7 ausgeworfene Boden kann beim nächsten Arbeitsgang in entgegengesetzter Richtung durch den Pflug 1 wieder in der Pflugfurche abgelegt werden.

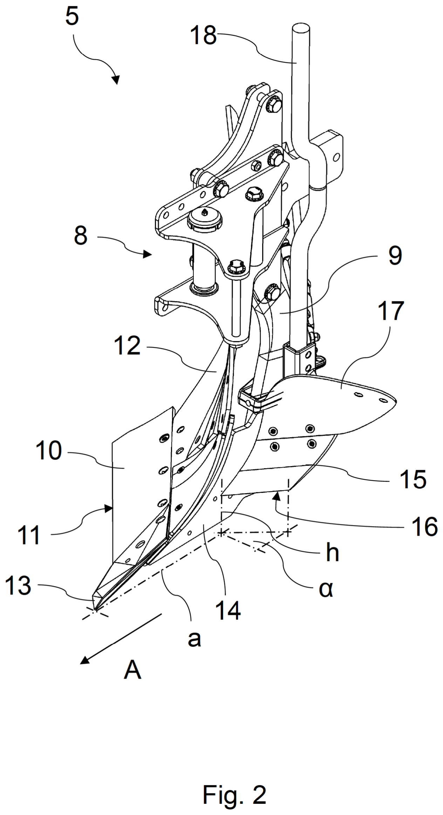

Der Pflugkörper 5 (Fig. 2) ist mittels eines Pflugkörperhalms 9 über eine Schwenktasche 8 mit dem Pflugrahmen (nicht dargestellt) verbunden. Der Pflugkörper 5 ist mehrteilig aufgebaut und weist zum Aufnehmen des Bodens ein Pflugschar 10 mit einer Schnittkante 11 sowie eine Scharspitze 13 auf. Das Pflugschar 10 ist dabei seitlich unmittelbar an der Scharspitze 13 angeordnet und entgegen der Arbeitsrichtung A nach seitlich hinten abgewinkelt. Um den aufgenommenen Boden anzuheben und zu wenden, weist der Pflugkörper 5 mehrere Streichblechstreifen 12 auf, welche an dem Pflugschar 10 und der Scharspitze 13 angeordnet sind. Landseitig weist der Pflugkörper 5 eine Anlage 14 auf, welche im Wesentlichen in Form einer senkrechten Fläche ausgebildet ist.

Das Werkzeug 7 ist landseitig an der Anlage 14 des Pflugkörpers 5 angeordnet. Das Werkzeug 7 ist dabei über einen Werkzeughalm 18 ebenfalls mit über die Schwenktasche 8 mit dem Pflugrahmen (nicht dargestellt) verbunden. Hierdurch kann eine Einstellung des Werkzeuges 7 in horizontaler Richtung a, sowie in vertikaler Richtung h relativ zu dem Pflugkörper 5 und unabhängig von diesem erfolgen. Das dargestellte Werkzeug 7 ist in horizontaler Richtung a relativ zur Spitze der Scharspitze 13 entgegen der Arbeitsrichtung A nach hinten versetzt und zudem in vertikaler Richtung h oberhalb der Unterkante der Scharspitze 13 angeordnet. Durch diesen Versatz des Werkzeuges 7 bleibt die Bodenbearbeitung des Pflugkörpers 5 im Wesentlichen unbeeinflusst durch das Werkzeug 7. Das Werkzeug 7 ist mehrteilig ausgestaltet und weist zum Aufnehmen bzw. Schneiden des Bodens ein Werkzeugschar 15 mit einer Schnittkante 16 auf. Angrenzend an das Werkzeugschar 15 ist ein Werkzeugstreichblech 17 angeordnet, durch welches der aufgenommene Boden landseitig des Pflugkörpers 5 auf ungepflügten Boden geworfen werden kann. Das Werkzeugschar ist entgegen der Arbeitsrichtung A nach hinten unter einem Winkel α abgewinkelt. Das Pflugschar 10 und das Werkzeugschar 15 greifen dabei entgegengesetzt in den Boden ein.

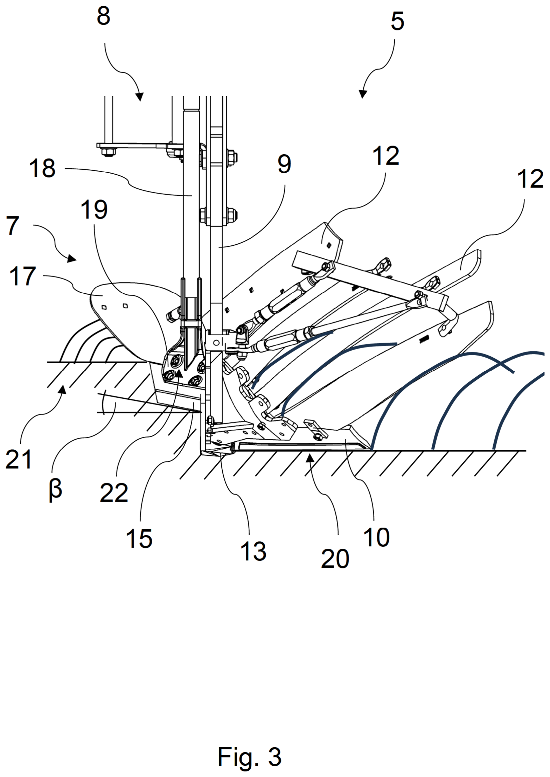

In Fig. 3 ist ein hinterster Pflugkörper 5 mit daran angeordnetem Werkzeug 7 in Arbeitsrichtung A gesehen in einer Hinteransicht dargestellt. Der Pflugkörper 5 mit seinem Pflugschar 10 und der Scharspitze 13 nehmen den Boden auf und wenden diesen mittels der Streichblechstreifen 12 zur rechten Seite, wodurch eine Pflugfurche 20 erzeugt wird. Das Werkzeug 7, welches landseitig des Pflugkörpers 5 an diesem angeordnet ist, nimmt mit dem Werkzeugschar 15 ebenfalls Boden auf, wobei dieser jedoch mittels des Werkzeugstreichbleches 17 nach links, entgegengesetzt zum Pflugkörper 5, auf den ungepflügten Boden 21 geworfen wird. Dies hat den Vorteil, dass eine verbreiterte Pflugfurche 20 für breitere Reifen erzeugt werden kann, ohne dass der zusätzlich aufgenommene Boden in die Pflugfurche 20 gelangt und dort festgefahren werden könnte.

Das in Fig. 3 dargestellte Werkzeug 7 ist mit seinem Werkzeugschar 15 oberhalb der Scharspitze 13 bzw. des Pflugschars 10 angeordnet. Das Werkzeugschar 15 ist dabei um einen Winkel β nach oben geneigt. Das Werkzeugschar 15 und das Werkzeugstreichblech 17 sind lösbar an einem Grundkörper 19 des Werkzeuges 7 angeordnet. Über eine Verstelleinrichtung 22, beispielsweise in Form einer Bolzenverbindung mit Langlöchern, können das Werkzeugschar 15 und/oder das Werkzeugstreichblech 17 verstellt werden. Denkbar ist auch eine Verstellung über eine Verstelleinrichtung 22 in Form mindestens eines Aktors (nicht dargestellt). Über den Werkzeughalm 18 ist das Werkzeug 7 mit dem Rahmen (nicht dargestellt) bzw. einer Schwenktasche 8 verbunden, wobei hier beispielsweise eine Verstellung des Werkzeuges 7 in einer vertikalen Richtung h ermöglicht werden kann.

**Bezugszeichen**

| | | | |
|---|---|---|---|
| 1 | Pflug | A | Arbeitsrichtung |
| 2 | Pflugturm | | |
| 3 | Schwenkvorrichtung | a | Horizontaler Abstand |
| 4 | Pflugrahmen | h | Vertikaler Abstand |
| 5 | Pflugkörper | α | Winkel α |
| 6 | Stützrad | β | Winkel β |
| 7 | Werkzeug | | |
| 8 | Schwenktasche | | |
| 9 | Pflugkörperhalm | | |
| 10 | Pflugschar | | |
| 11 | Schnittkante | | |
| 12 | Streichblechstreifen | | |
| 13 | Scharspitze | | |
| 14 | Anlage | | |
| 15 | Werkzeugschar | | |
| 16 | Schnittkante | | |
| 17 | Werkzeugstreichblech | | |
| 18 | Werkzeughalm | | |
| 19 | Grundkörper | | |
| 20 | Pflugfurche | | |
| 21 | Ungepflügter Boden | | |
| 22 | Verstellvorrichtung | | |

## Patentansprüche

1. Pflug, insbesondere Drehpflug, mit einem Pflugrahmen (4) und mindestens zwei Pflugkörpern (5), wobei die Pflugkörper (5) an dem Pflugrahmen (4) angeordnet sind, **dadurch gekennzeichnet, dass** in Arbeitsrichtung (A) des Pfluges (1) gesehen endseitig des Pflugrahmens (4), insbesondere im Bereich eines hintersten Pflugkörpers (5), mindestens ein erdbewegendes Werkzeug (7) angeordnet ist, wobei das Werkzeug (7) derart ausgestaltet ist, dass ein durch das Werkzeug (7) bearbeiteter Boden auf dem ungepflügten Boden (21), insbesondere benachbart zu einer Pflugfurche (20) des hintersten Pflugkörpers (5), insbesondere zumindest teilweise, abgelegt wird.

2. Pflug nach Anspruch 1, **dadurch gekennzeichnet, dass** das Werkzeug (7) zumindest teilweise an einer dem ungepflügten Boden (21) zugewandten Seite des hintersten Pflugkörpers (5) angeordnet ist.

3. Pflug nach Anspruch 1 oder 2, **dadurch gekennzeichnet, dass** in Arbeitsrichtung (A) ein horizontaler Abstand (a) des Werkzeuges (7), insbesondere eines Werkzeugschars (15), relativ zum Pflugkörper (5), insbesondere dessen Scharspitze (13), einstellbar ist.

4. Pflug nach einem der vorherigen Ansprüche, **dadurch gekennzeichnet, dass** eine Arbeitstiefe (h) des Werkzeuges, insbesondere des Werkzeugschars (15), relativ zum Pflugkörper (5), insbesondere dessen Scharspitze (13) einstellbar ist.

5. Pflug nach einem der vorherigen Ansprüche, **dadurch gekennzeichnet, dass** das Werkzeug (7), insbesondere dessen Werkzeugschar (15), unter einem, insbesondere einstellbaren, Winkel (α) relativ zu dem Pflugkörper (5), insbesondere dessen Anlage (14), und/oder der Arbeitsrichtung (A) angeordnet ist.

6. Pflug nach einem der vorherigen Ansprüche, **dadurch gekennzeichnet, dass** das Werkzeug (7) ein- oder mehrteilig ausgestaltet ist.

7. Pflug nach einem der vorherigen Ansprüche, **dadurch gekennzeichnet, dass** der Pflug (1) mindestens eine Verstellvorrichtung (22), insbesondere einen Aktor, zum Verlagern mindestens eines Werkzeuges (7) aufweist.

8. Pflug nach einem der vorherigen Ansprüche, **dadurch gekennzeichnet, dass** das Werkzeug (7) an einem Pflugkörperhalm (9), einem Pflugkörper (5) und/oder, insbesondere mittels eines Werkzeughalms (18), an dem Pflugrahmen (4) angeordnet ist.

9. Pflug nach einem der vorherigen Ansprüche, **dadurch gekennzeichnet, dass** eine zweite Reihe an Pflugkörpern (5) vorgesehen ist und mindestens ein zweites Werkzeug (7), insbesondere an einem zweiten hintersten Pflugkörper (5), der zweiten Reihe an Pflugkörpern (5) vorgesehen ist.

10. Pflug nach einem der vorherigen Ansprüche, **dadurch gekennzeichnet, dass** der Pflug (1) eine Schwenkvorrichtung (3) zum im Wesentlichen horizontalen Verschwenken des Pflugrahmens (4) aufweist, wobei der Pflugrahmen (4) Schwenktaschen (8) zur schwenkbaren Aufnahme der Pflugkörper (5), Pflugkörperhalme (9), Werkzeuge (7) und/oder Werkzeughalme (18) aufweist.
